# EUROPEAN PATENT APPLICATION

(11) **EP 3 782 715 A1**
(43) Date of publication of application: **24.02.2021**
(21) Application number: 19788980.1
(22) Date of filing: 18.04.2019
(51) Int. Cl.: B01D 53/50, B01D 53/14

(54) **DESULFURIZATION DEVICE**

(30) Priority: 20.04.2018 JP 2018081505
(71) Applicant: Mitsubishi Power, Ltd., Yokohama-shi, Kanagawa 220-8401 (JP)
(72) Inventor: KOBAYASHI Tsukasa, Yokohama-shi, Kanagawa 220-8401 (JP); OKURA Hajime, Yokohama-shi, Kanagawa 220-8401 (JP); INABA Norikazu, Yokohama-shi, Kanagawa 220-8401 (JP); KATAGAWA Atsushi, Yokohama-shi, Kanagawa 220-8401 (JP)
(74) Representative: Studio Torta S.p.A.
(86) International application number: PCT/JP2019/016575
(87) International publication number: WO 2019/203295

(57) **Abstract**

Even when exhaust gas has a high concentration of sulfur oxide, the cleaning capacity for an exhaust gas passage can be ensured by a desulfurization device (1) that comprises cleaning nozzles (22, 23, 41, 42) that inject cleaning liquid to clean the inner face of a passage (3) through which the exhaust gas passes, wherein: the cleaning nozzles (22, 23, 41, 42) have a nozzle body (31) that penetrates into the interior of the passage (3) by the tip thereof passing through a nozzle passage (3b) and that has an injection opening (31c, 31c') to inject the cleaning liquid, and an anchor unit (32) that supports the nozzle body (31), is disposed outside of the passage (3), and is anchored relative to the wall (3a) of the passage (3); the nozzle body (31) is constituted from a corrosion-resistant material; and the anchor unit (32) is constituted from a material different from the nozzle body (31).

## Description

### [Technical Field]

The present invention relates to a desulfurization device which desulfurizes an exhaust gas from a combustion device such as a boiler, and more particularly, to a desulfurization device which can be used even in an exhaust gas where sulfur oxides are at a high concentration.

### [Background Art]

As a means for removing sulfur oxides in an exhaust gas discharged from a boiler, and the like in a thermal power plant, a wet lime gypsum method is widely used.

Regarding a desulfurization device using the wet lime gypsum method, techniques described in Patent Documents 1 and 2 below are known in the art.

Patent Document 1 (Japanese Patent Laid-Open Publication No. H8-290037) discloses a wet flue-gas desulfurization device having a configuration in which spray nozzles (4) are installed at a bottom of an absorption tower inlet spray part (11) of an inlet duct (2), and an absorption liquid is sprayed upward from the spray nozzles (4) to remove SO₂ in the exhaust gas.

Patent Document 2 (Japanese Patent Laid-Open Publication No. H7-275742) describes a structure for supporting a nozzle (12) made of ceramic for injecting an absorption liquid slurry used in a spray type absorption tower of a flue-gas desulfurization device. Patent Document 2 describes a configuration in which the nozzle (12) made of ceramic is fixed to a support nozzle (14) made of metal with an elastic bush (18) interposed therebetween, thereby suppressing the nozzle (12) made of ceramic from cracking.

### [Prior Art Document]

### [Patent Document]

Patent Document 1: Japanese Unexamined Patent Application Publication No. H8-290037 ("0019" to "0021" and FIG. 1)
Patent Document 2: Japanese Unexamined Patent Application Publication No. H7-275742 (FIGS. 1, 3 and 4)

### [Summary of Invention]

### [Technical Problem]

As described in Patent Documents 1 and 2, in the conventional desulfurization device, the sulfur oxide (SOx) in the exhaust gas comes into contact with the absorption liquid slurry (limestone slurry) which is circulated and sprayed in the absorption tower, such that the sulfur oxides are removed from the exhaust gas.

In a duct portion for introducing the exhaust gas into the absorption tower, a flow rate of the exhaust gas is set within a constant range (10 to 15 m/s), but if gypsum produced by a reaction with the sulfur oxides in the absorption tower is deposited in the duct portion, the duct will become clogged, and the flow rate will not fall within the constant range. Therefore, in the conventional desulfurization device, cleaning nozzles for cleaning a bottom surface, side surface, and top surface of the inlet duct are installed in the inlet duct portion separately from the duct for spraying the absorption liquid, in order to prevent a deposition of gypsum scale.

In addition, the nozzles for injecting an absorption liquid slurry described in Patent Documents 1 and 2 are required to uniformly spray the slurry in order to absorb SO₂ in the exhaust gas duct, but the cleaning nozzles, which are a subject of the present invention, are required to locally inject cleaning water, such that structures thereof are different from each other.

Further, since the nozzles for injecting an absorption liquid slurry described in Patent Documents 1 and 2 are installed inside the absorption tower, the sprayed absorption liquid directly comes into contact with the nozzles, and it is necessary to have a structure in consideration of the impact. On the other hand, since the cleaning nozzles, which are the subject of the present invention, are mainly installed in the inlet duct, the absorption liquid does not directly come into contact with the nozzles, and the structure for protecting the same from the impact as described above is unnecessary.

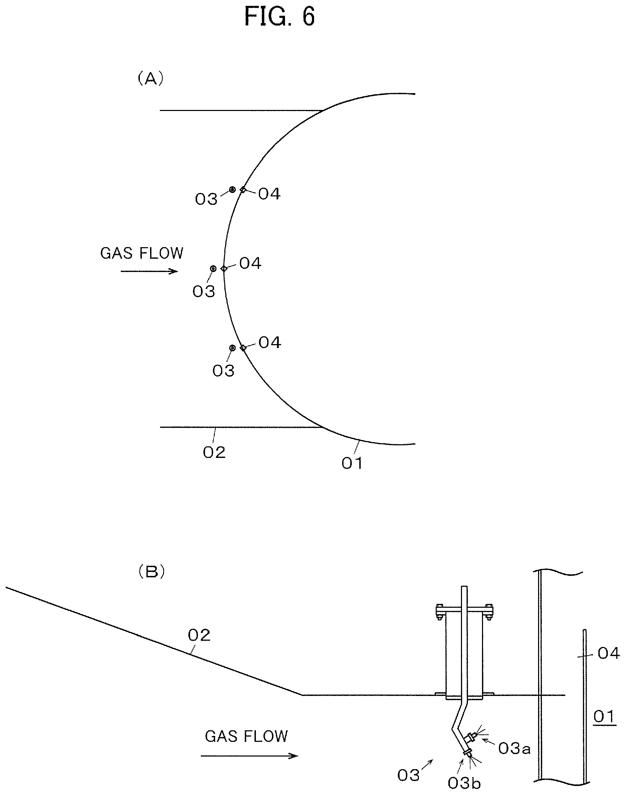

FIG. 6 is a view describing cleaning nozzles in a conventional desulfurization device, wherein FIG. 6(A) is a plan view, and FIG. 6(B) is a side view.

In FIG. 6, cleaning nozzles 03 extending from a wall surface of an inlet duct 02 are installed inside the inlet duct 02 which introduces the exhaust gas into the absorption tower 01. The cleaning nozzle 03 has a first spray part 03a for cleaning a bottom surface, side surface, and top surface of the inlet duct 02, and a second spray part 03b for cleaning a post (columnar member) 04 of the absorption tower. The cleaning nozzle 03 is formed in a bent shape so that the cleaning nozzle 03 approaches a cleaning target portion, because a cleaning efficiency is better when the cleaning liquid is sprayed in the vicinity of the target portion (wall surface or post) to be cleaned.

Conventionally, the cleaning nozzle 03 was made of a metal material such as carbon steel or alloy, etc., in consideration of corrosion. However, when a fuel containing a large amount of sulfur is used in the boiler, SO₃ in the exhaust gas is at a high concentration. If the SO₃ in the exhaust gas is at the high concentration, the cleaning nozzle 03 may be corroded.

It is a technical object of the present invention to ensure a cleaning capability of an exhaust gas passage even when sulfur oxides in the exhaust gas are at a high concentration.

### [Solution to Problem]

The above object of the present invention may be achieved by employing the following configurations.

An invention of a first aspect of the present invention provides a desulfurization device including: a passage part through which an exhaust gas passes; a nozzle passage part formed in a wall of the passage part; and a cleaning nozzle which is supported in the nozzle passage part, and sprays a cleaning liquid for cleaning an inner surface of the passage part, wherein the cleaning nozzle includes: a nozzle body whose tip passes through the nozzle passage part to enter an inside of the passage part, and having an injection port for injecting the cleaning liquid; and a fixing part which supports the nozzle body, and is relatively fixed to the wall of the passage part, with being disposed outside of the passage part, the nozzle body is made of a corrosion resistant material, and the fixing part is made of a material different from that of the nozzle body.

An invention of a second aspect of the present invention provides the desulfurization device according to the first aspect of the present invention, including the nozzle body whose tip is formed in a shape linearly protruding from an inner surface of the wall of the passage part.

An invention of a third aspect of the present invention provides the desulfurization device according to the first or second aspect of the present invention, including the nozzle body made of silicon carbide which is a corrosion resistant material; and the fixing part made of a metal material.

An invention of a fourth aspect of the present invention provides the desulfurization device according to the first or second aspect of the present invention, including a flange part which is provided in the nozzle body, and is disposed between the wall of the passage part around the nozzle passage part and the fixing part, thus to prevent the exhaust gas from entering the fixing part.

### [Advantageous Effects]

In accordance with the invention according to the first aspect of the present invention, since the nozzle body made of a corrosion resistant material enters an inside of the passage part, and the nozzle body is fixed to the wall of the passage part at the outside of the passage part via the fixing part, even when sulfur oxides in the exhaust gas are at a high concentration, corrosion of the nozzle body is suppressed. Therefore, even when the sulfur oxides in the exhaust gas are at the high concentration, the cleaning liquid may be stably injected to perform cleaning, and a cleaning capability of the exhaust gas passage may be ensured.

In accordance with the invention according to the second aspect of the present invention, in addition to the effect of the first aspect of the present invention, it is easier to manufacture the nozzle main body than the conventional configuration in which the nozzle is bent. In particular, it is also possible to use a corrosion resistant material which is difficult to manufacture and process into a complicated shape.

In accordance with the invention according to the third aspect of the present invention, in addition to the effect of the first or second aspect of the present invention, even when the nozzle body is made of silicon carbide which has corrosion resistance but is easily cracked, it is possible to fix the nozzle body by the fixing part made of metal, and suppress the nozzle body from being damaged.

In accordance with the invention according to the fourth aspect of the present invention, in addition to the effect of the first or second aspect of the present invention, by providing the flange part, it is possible to prevent the fixing part from being corroded due to the exhaust gas. In addition, a member such as a gasket is not necessary, and the number of parts, manufacturing costs, and assembly costs may be reduced.

### [Brief Description of Drawings]

FIG. 1 is a view (side view) describing a desulfurization device which is an embodiment of the present invention.
FIG. 2 is views describing a cleaning device in the vicinity of a post in the desulfurization device of Embodiment 1, wherein FIG. 2(A) is a plan view, FIG. 2(B) is an enlarged view of major parts of FIG. 2(A), FIG. 2(C) is a cross-sectional view taken on line IIC-IIC of FIG. 2(A), FIG. 2(D) is a cross-sectional view of a nozzle for cleaning a wall surface, FIG. 2(E) is a perspective view of a nozzle tip portion of FIG. 2(D), FIG. 2(F) is a cross-sectional view of a nozzle for cleaning a post, and FIG. 2(G) is a perspective view of a nozzle tip portion of FIG. 2(F).
FIG. 3 is a view describing a cleaning device for a bottom surface portion of an inlet duct of Embodiment 1.
FIG. 4 is views describing a cleaning device for a side surface portion of the inlet duct of Embodiment 1, wherein FIG. 4(A) is a plan view, and FIG. 4(B) is a side view.
FIG. 5 is a view describing a modification of the cleaning nozzle used in the desulfurization device of the present invention.
FIG. 6 is a view describing cleaning nozzles in a conventional desulfurization device, wherein FIG. 6(A) is a plan view, and FIG. 6(B) is a side view.

### [Description of Embodiments]

Hereinafter, embodiments of the present invention will be described.

### Embodiment 1

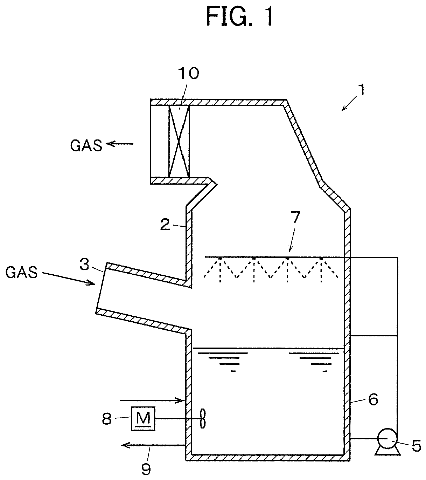

FIG. 1 is a view (side view) describing a desulfurization device which is an embodiment of the present invention.

In FIG. 1, a desulfurization device 1 of Embodiment 1 of the present invention has an absorption tower 2. A central side portion of the absorption tower 2 in a vertical direction is connected with an inlet duct 3 as an example of a passage part. The inlet duct 3 introduces an exhaust gas from a combustion device such as a boiler (not illustrated) into the absorption tower 2. A tank 6 is installed at an inner bottom portion of the absorption tower 2. An absorption liquid (limestone slurry), gypsum produced by a reaction between the absorption liquid and sulfur oxides, and the like are stored in the tank 6.

Spray nozzles 7 are installed inside the absorption tower 2 above the inlet duct 3. The spray nozzles 7 are nozzles for spraying the absorption liquid, and a plurality of spray nozzles are disposed at an interval in a horizontal direction. The absorption liquid in the tank 6 is supplied to the spray nozzles 7 by a circulation pump 5. Further, the absorption liquid in the tank 6 is agitated by an agitator 8. Then, a portion of the absorption liquid in the tank 6 is extracted by an absorption liquid extraction pipe 9, and sent to a gypsum recovery system (not illustrated).

An upper portion of the absorption tower 2 is connected with an outlet duct 10. The outlet duct 10 discharges the exhaust gas desulfurized by the absorption liquid in the absorption tower 2.

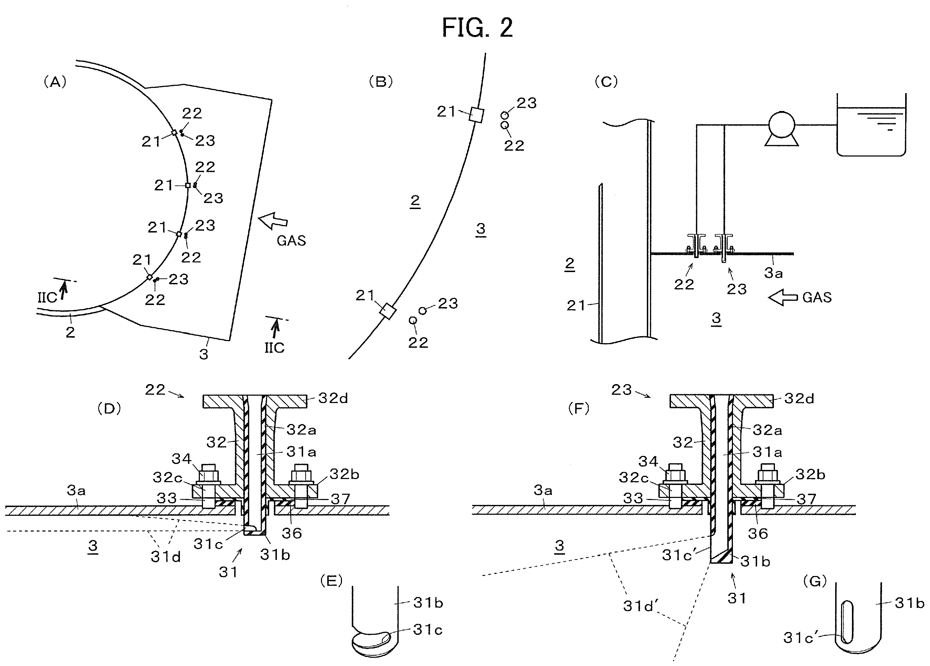

FIG. 2 is views describing a cleaning device in the vicinity of a post in the desulfurization device of Embodiment 1, wherein FIG. 2(A) is a plan view, FIG. 2(B) is an enlarged view of major parts of FIG. 2(A), FIG. 2(C) is a cross-sectional view taken on line IIC-IIC of FIG. 2(A), FIG. 2(D) is a cross-sectional view of a nozzle for cleaning a wall surface, FIG. 2(E) is a perspective view of a nozzle tip portion of FIG. 2(D), FIG. 2(F) is a cross-sectional view of a nozzle for cleaning a post, and FIG. 2(G) is a perspective view of a nozzle tip portion of FIG. 2(F).

In FIGS. 2(A) to 2(C), a plurality of posts 21 are installed in the absorption tower 2 of the desulfurization device 1 of Embodiment 1 at an interval in a circumferential direction. The posts 21 are installed for a reinforcement of a portion to which the inlet duct 3 is connected.

Top surface cleaning nozzles 22 and post cleaning nozzles 23 are disposed one set by one set in the vicinity of an upstream side of the inlet duct 3 in a gas flow direction with respect to each post 21. In Embodiment 1, the top surface cleaning nozzle 22 and the post cleaning nozzle 23 are disposed adjacent to each other.

The top surface cleaning nozzle 22 has a nozzle body 31 that passes through a passage port (nozzle passage part) 3b formed in a wall 3a of the inlet duct 3. The nozzle body 31 is formed in a cylindrical shape extending in a normal direction with respect to an inner surface of the wall 3a of the inlet duct 3. The nozzle body 31 of Embodiment 1 is disposed in a form in which only an inner end portion thereof enters an inside of the inlet duct 3. Therefore, only the inner end portion 31b having a linear shape enters the inside, without being formed in the bent shape as in the conventional configuration shown in FIG. 6. Thereby, the nozzle body 31 is formed and disposed in a shape that linearly protrudes from the inner surface of the wall 3a of the inlet duct 3.

A flow path 31a through which a cleaning liquid passes is formed inside the nozzle body 31. In FIG. 2(E), a long hole-shaped injection port 31c extending in the circumferential direction is formed in the inner end portion 31b of the nozzle body 31. Therefore, in the top surface cleaning nozzle 22 of Embodiment 1, as shown by broken lines 31d in FIG. 2(D), it is possible to spray the cleaning liquid toward the wall 3a side from a position along the inner surface of the wall 3a of the inlet duct 3. In addition, a direction in which the cleaning liquid is injected is set in a direction along a flow direction of the exhaust gas.

The nozzle body 31 of Embodiment 1 is made of silicon carbide (SiC, ceramic) as an example of a corrosion resistant material. In particular, SiSiC (ceramic silicon carbide), which has a higher hardness than even the silicon carbide, is preferable. Further, as the corrosion resistant material, any material having resistance to corrosion due to sulfur oxide (or sulfuric acid) may be used, but it is not limited to silicon carbide (SiC), and for example, alumina (Al₂O₃) a fluorine resin (PTFE: polytetrafluoroethylene, etc.), a corrosion resistant heat resistant nonmetal, and the like are preferably used. In addition, the nozzle body 31 may also be configured in such a way that the inside thereof is made of any material, and the surface thereof is subjected to corrosion resistant fluorine resin coating. Therefore, at least the surface of the nozzle body 31 of Embodiment 1 is made of a corrosion resistant material.

The nozzle body 31 is supported by an adapter 32 as an example of a fixing part. The adapter 32 has a housing hole 32a formed therein along the nozzle body 31, into which the nozzle body 31 is housed. The adapter 32 has an inner flange 32b formed thereon to face the wall 3a.

In Embodiment 1, a plurality of outwardly protruding studs 33 are supported on an outer surface of the wall 3a of the inlet duct 3. The stud 33 has a thread formed on an outer surface thereof.

The inner flange 32b has a through hole 32c formed therein, through which the stud 33 penetrates. By mounting a nut (fastening member) 34 on the stud 33, with the stud 33 penetrating the through hole 32c, it is possible to relatively fix the adapter 32 to the nozzle body 31 together with the wall 3a.

The adapter 32 has an outer flange 32d formed on an outer side thereof. The outer flange 32d is connected with a pipe from a cleaning liquid tank (not illustrated). Therefore, the cleaning liquid from the cleaning liquid tank is sent to the flow path 31a inside the nozzle body 31 by a cleaning liquid pump (not illustrated), to be injected from the injection port 31c.

The adapter 32 of Embodiment 1 is made of a material different from that of the nozzle body 31, and any material having strength and durability for fixing the top surface cleaning nozzle 22 to the wall 3a may be used. That is, when fastening the stud 33 and the nut 34, as a ceramic material, it is possible to use a metal material having no risk of cracking, and carbon steel, stainless steel, and the like may be used.

In FIG. 2(D), in Embodiment 1, a gasket 36 and a gasket protection member 37 are disposed inside the stud 33 and outside the nozzle body 31. The gasket 36 and the gasket protection member 37 are fixed by the stud 33 and the nut 34, with being sandwiched between the inner flange 32b of the adapter 32 and the outer surface of the wall 3a. Therefore, the exhaust gas inside the inlet duct 3 is prevented from coming into contact with the adapter 32.

Further, the gasket 36 and the gasket protection member 37 are preferably made of a corrosion resistant material, but may be made of a fluororesin, for example.

In FIGS. 2(F) and 2(G), the post cleaning nozzle 23 has the same configuration as the top surface cleaning nozzle 22 except that a shape of the injection port 31c is different. That is, in the post cleaning nozzle 23, the injection port 31c' extends in the axial direction of the cylindrical nozzle body 31. Therefore, as shown by the broken lines 31d' in FIG. 2(F), the cleaning liquid may be sprayed over a wider area in the vertical direction than the top surface cleaning nozzle 22. Therefore, it is possible to clean a wide range of the post 21 in the vertical direction.

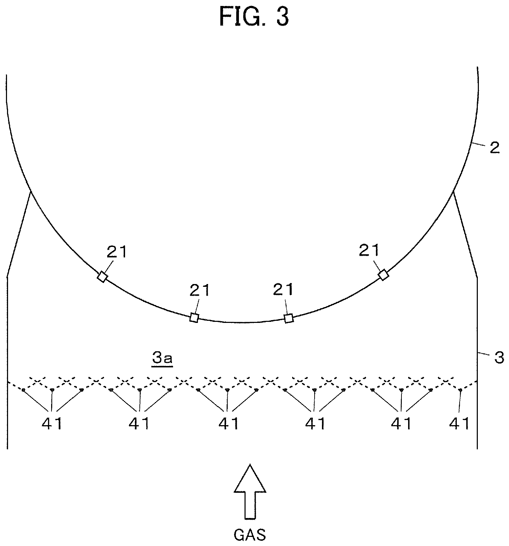

FIG. 3 is a view describing a cleaning device for a bottom surface portion of an inlet duct of Embodiment 1.

In FIG. 3, a plurality of bottom surface cleaning nozzles 41 are disposed at a bottom surface portion of the inlet duct 3 of Embodiment 1 at an interval in the horizontal direction. In addition, the bottom surface cleaning nozzle 41 has the same configuration as the top surface cleaning nozzle 22, and therefore will not be illustrated and described in detail. Accordingly, the bottom surface cleaning nozzles 41 may clean the bottom surface of the wall 3a of the inlet duct 3 as in the case of FIG. 2(D).

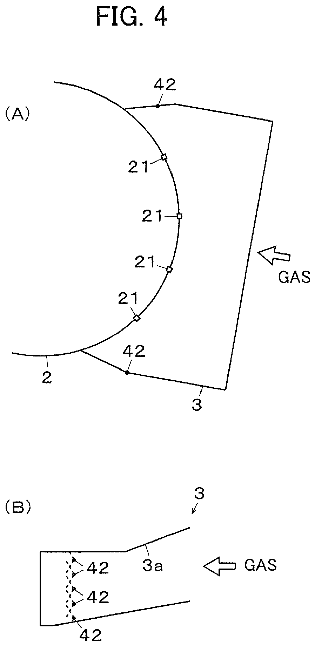

FIG. 4 is views describing a cleaning device for a side surface portion of the inlet duct of Embodiment 1, wherein FIG. 4(A) is a plan view, and FIG. 4(B) is a side view.

In FIG. 4, side surface cleaning nozzles 42 are disposed on the side surface of the inlet duct 3 of Embodiment 1 at a downstream portion in an exhaust gas flow direction. A plurality of side surface cleaning nozzles 42 are disposed at an interval in a height direction. In addition, the side surface cleaning nozzle 42 has the same configuration as the top surface cleaning nozzle 22, and therefore will not be illustrated and described in detail. Accordingly, the side surface cleaning nozzles 42 may clean the side surface of the wall 3a of the inlet duct 3 as in the case of FIG. 2(D).

### (Operation of Embodiment 1)

In the desulfurization device 1 of Embodiment 1 having the above-described configuration, a portion of each of the nozzles 22, 23, 41 and 42, which enters the inside of the inlet duct 3, is made of a corrosion resistant ceramic. Therefore, even if the concentration of sulfur oxides in the exhaust gas is high, the nozzles 22, 23, 41 and 42 are less likely to corrode, and the cleaning capability of gypsum is secured. Accordingly, it is possible to suppress a desulfurizing capability from being reduced due to a deposition of the gypsum on the downstream portion of the inlet duct 3. Further, since the nozzles 22, 23, 41 and 42 are less likely to corrode, there is no need to frequently replace them, and maintenance costs may be reduced.

Furthermore, in the nozzles 22, 23, 41 and 42 of Embodiment 1, the nozzle body 31 is fixed to the inlet duct 3 via the adapter 32. If the nozzle body 31 made of ceramic is fixed with a bolt or the like, the duct (metal material) and the ceramic have different thermal expansion coefficients, such that the nozzle body 31 may be cracked, but in Embodiment 1, a damage of the nozzle body 31 is suppressed by using the adapter 32 made of metal.

Further, in the nozzles 22, 23, 41 and 42 of Embodiment 1, it is configured so that the exhaust gas does not come into direct contact with the adapter 32 by installing the gasket 36 and the like. Therefore, the adapter 32 is prevented from corroding. Thereby, it is not necessary to use an expensive corrosion resistant metal material for the adapter 32, or to perform corrosion resistant coating. Therefore, an increase in costs of the adapter 32 may be suppressed.

Further, in Embodiment 1, by changing the shapes of the injection ports 31c and 31c' depending on the portion to be cleaned, it is possible to perform the spraying to the wall 3a or the post 21. Therefore, unlike the conventional configuration shown in FIG. 6, it is not necessary to make the injection port in a bent shape. When the bent shape is made of ceramic, there is a problem that it takes time and costs for manufacturing and processing, but in Embodiment 1, it possible to achieve a desired cleaning capability by the shape which linearly protrudes.

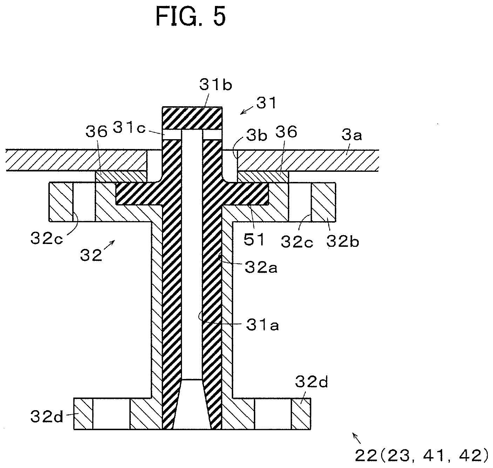

FIG. 5 is a view describing a modification of the cleaning nozzle used in the desulfurization device of the present invention.

In FIG. 5, instead of the nozzle body 31 of Embodiment 1, it may also be configured to provide a flange part 51 at a portion corresponding to the inner end portion of the adapter 32. The flange part 51 is formed in a disk shape (flange shape) larger than the passage port 3b.

Therefore, when the adapter 32 is fastened to the wall 3a, the flange part 51 comes into contact with the outer surface of the wall 3a to be a shape of closing the passage port 3b. Therefore, even if the gasket protection member 37 is not provided, the exhaust gas is suppressed from leaking to the adapter 32 side by the gasket 36 and the flange part 51. It is not necessary to provide the gasket protection member 37, etc., and the number of parts may be reduced, as well as manufacturing costs and assembly costs may be reduced.

### (Other modifications)

Although the embodiments of the present invention have been described above in detail, the present invention is not limited to the above-described embodiments, and various modifications may be made within the scope of the present invention described in the claims. Modifications (H01) and (H02) of the present invention will be described as examples below.

(H01) In the above-described embodiments, the positions of installing the nozzles 22, 23, 41 and 42 and the numbers thereof are not limited to those exemplified in the embodiments, and may be arbitrarily changed depending on the designs and specifications.

(H02) In the above-described embodiments, the present invention may be applied to a configuration which does not have the post 21. In addition, in the configuration which does not have the post 21, a configuration which is not provided with the post cleaning nozzle 23 may also be possible.

### [Reference Signs List]

- 1: Desulfurization device,
- 3: Passage part,
- 3a: Wall of passage part,
- 3b: Nozzle passage part,
- 22, 23, 41, 42: Cleaning nozzle,
- 31: Nozzle body,
- 31b: Tip of nozzle body,
- 31c, 31c': Injection port,
- 32: Fixing part,
- 51: Flange part.

## Claims

1. A desulfurization device comprising:
a passage part through which an exhaust gas passes;
a nozzle passage part formed in a wall of the passage part; and
a cleaning nozzle which is supported in the nozzle passage part, and sprays a cleaning liquid for cleaning an inner surface of the passage part,
wherein the cleaning nozzle includes: a nozzle body whose tip passes through the nozzle passage part to enter an inside of the passage part, and having an injection port for injecting the cleaning liquid; and a fixing part which supports the nozzle body, and is relatively fixed to the wall of the passage part, with being disposed outside of the passage part,
the nozzle body is made of a corrosion resistant material, and
the fixing part is made of a material different from that of the nozzle body.

2. The desulfurization device according to claim 1, comprising the nozzle body whose tip is formed in a shape linearly protruding from an inner surface of the wall of the passage part.

3. The desulfurization device according to claim 1 or 2, comprising:
the nozzle body made of silicon carbide which is a corrosion resistant material; and
the fixing part made of a metal material.

4. The desulfurization device according to claim 1 or 2, comprising a flange part which is provided in the nozzle body, and is disposed between the wall of the passage part around the nozzle passage part and the fixing part, thus to prevent the exhaust gas from entering the fixing part.
